# EUROPÄISCHE PATENTSCHRIFT

(11) **EP 2 751 312 B1**
(45) Veröffentlichungstag und Bekanntmachung des Hinweises auf die Patenterteilung: **11.07.2018**
(21) Anmeldenummer: 12756170.2
(22) Anmeldetag: 03.09.2012
(51) Int. Cl.: D01D 5/088, D01F 2/00, C08J 5/18, D01D 10/02

(54) **EXTRUSIONSVERFAHREN UND -VORRICHTUNG**
EXTRUSION METHOD AND DEVICE
PROCÉDÉ ET DISPOSITIF D'EXTRUSION

(30) Priorität: 02.09.2011 EP 11179865; 26.12.2011 CN 201120551705 U
(43) Veröffentlichungstag der Anmeldung: 09.07.2014
(73) Patentinhaber: Aurotec GmbH, 4840 Vöcklabruck (AT)
(72) Erfinder: ZIKELI, Stefan, A-4844 Regau (AT); ECKER, Friedrich, A-4850 Timelkam (AT)
(74) Vertreter: Sonn & Partner Patentanwälte
(86) Internationale Anmeldenummer: PCT/EP2012/067078
(87) Internationale Veröffentlichungsnummer: WO 2013/030400

(56) Entgegenhaltungen:
- WO-A1-97/38153
- GB-A- 900 009
- US-A- 5 171 504

## Beschreibung

Die vorliegende Erfindung betrifft Extrusionsmethoden, insbesondere zum Formen von Polymerlösungen oder -fluiden.

Celluose und andere Polymere können in geeigneten Lösungsmitteln gelöst werden und durch kontrolliertes Verfestigen in einen gewünschten Formkörper überführt werden. Wenn es sich bei diesem Formkörper um Fäden, Fibrillen und dgl. handelt, spricht man auch von einem Spinnprozess. Cellulose wird beispielsweise in wässrigen Lösungen von Aminoxiden, insbesondere von Lösungen von N-Methyl-Morpholin-N-oxid (NMMO) gelöst, um aus der erhaltenen Spinnlösung Spinnprodukte wie zum Beispiel Filamente Stapelfaser, Folien, etc herzustellen. Dies geschieht durch Ausfällen der Extrudate im Wasser oder verdünnten Aminoxidlösungen nachdem die Extrudate des Extrusionswerkzeugs über einen Luftspalt in das Fällbad geführt werden.

Die US 4, 416, 698 betrifft ein Extrusions- bzw. Spinnverfahren für Zellulose-Lösungen um Zellulose zu Fäden zu formen. Hierbei wird ein fluides Spinnmaterial - einer Lösung von Zellulose und NMMO (N-Methylmorpholin-N-oxid) oder anderen tertiären Aminen - durch Extrusion geformt und in ein Fällbad zur Verfestigung und Ausdehnung gebracht. Dieses Verfahren ist auch als "Lyocell"-Verfahren bekannt.

Die US 4,246,221 und die DE 2913589 beschreiben Verfahren zur Herstellung von Zellulosefilamenten oder -folien, wobei die Zellulose in fluider Form verstreckt wird. Darin wird ein Spinnprozess beschrieben, in welchem Cellulose in tertiärem Aminoxid gelöst wird, wobei die erhaltene Celluloselösung über ein Düsenwerkzeug gedrückt wird, über einen Luftspalt in einen Spinntrichter extrudiert wird und am Ende des Spinntrichters als Endlosfaden abgezogen wird. Der eingesetzte Spinntrichter ist mit einem Zuführmittel und einem Abführmittel für das Spinnbad ausgestattet.

Ein weiteres Verfahren wird in der US 5,252,284 beschrieben, in der längliche Formkapillaren zur Formung einer Zellulosemasse zum Einsatz kommen.

Die WO 93/19230 A1 beschreibt eine Weiterentwicklung des Lyocell-Verfahrens, bei dem das Zellulose-haltige Spinnmaterial unmittelbar nach dem Formen vor Einbringung in das Fällbad gekühlt wird.

Die WO 94/28218 A1 beschreibt ein Verfahren zur Herstellung von Zellulosefilamenten, bei dem eine Zelluloselösung über eine Düse zu mehreren Strängen geformt wird. Diese Stränge werden durch einen gasumströmten Spalt in ein Fällbad ("Spinnbad") gebracht werden und kontinuierlich ausgetragen.

In der WO 03/057951 A1 wird eine Formungsvorrichtung und eine weitere Variante des Lyocell-Verfahrens beschrieben, wobei das Zellulose-haltige Spinnmaterial nach Formung über einen Abschirmbereich und anschließend über einen Kühlbereich geleitet wird.

In der EP 0430926 B1 wird eine Spinndüse mit einem Spinndüsenkopf und einer Spinnplatte dargestellt, wobei die Spinnplatte aus einer stabilen Trägerplatte besteht, die mit Bohrungen versehen ist. In die zuvor genannten Bohrungen werden Düsenplättchen, in denen Spinnkapillaren angebracht sind eingesetzt.

US 5,171,504 A beschreibt eine Spinnvorrichtung für ein thermoplastisches Polymer, wobei das geschmolzene Polymer nach der Extrusion in einem Luftspalt abgekühlt wird bevor es in ein Spinnbad gelangt. Im Luftspalt gibt es unmittelbar nach der Extrusion eine "thermische Konditionierungszone", worin die Fasern bei höheren Temperaturen gehalten werden.

WO 97/38153 A1 betrifft ein Lyocellverfahren, bei dem im Luftspalt zwei unterschiedliche Luftgebläse verwendet werden, welche bei gleicher oder unterschiedlicher Temperatur betrieben werden können. Dieses Luftgebläse wird dazu verwendet, um unterschiedliche Feuchtigkeit in den beiden Gasströmen zu bewirken. Ein Heizteilstrom und ein Kühlteilstrom werden in diesem Dokument nicht beschrieben.

GB 900 009 A beschreibt das Spinnen von Polypropylen-Fasern durch Extrusion. Es finden sich darin Beispiele zu alternativen Behandlungsexperimenten, bei denen jeweils eine andere Temperatur im Luftspalt zum Einsatz kam. Die gleichzeitige Anwendung von Gasströmen unterschiedlicher Temperatur wird nicht beschrieben.

In der Publikation "The Temperature of Fibres during Air-Gap Wet Spinning: Cooling by Convection and Evaporation" - Volker Simon (Int. J. Heat Mass Transfer. Vol. 37, No. 7, pp. 1133 - 1142, 1994) werden Abläufe im Spinnprozess dargestellt. Es wird ausgeführt, dass das in den Luftspalt zugeführte Polymer Wasser enthält und das Wasser während des Spinnprozesses an der Oberfläche des Spinnfadens verdampft und diese Wasserverdampfung eine Kühlwirkung auf den Spinnfaden ausübt. Es wird der Schluss gezogen, dass die Fasertemperatur während der Extrusion relativ hoch ist und durch die Verdampfung des Wassers von der Faser die Wasserkonzentration in der Spinnumgebung erhöht ist.

Als Ergebnis wird angeführt, dass der Wasserdampf-Gradient dazu führt, dass der Wasserdampf-Massenstrom von der Faser Richtung Umgebung geleitet wird. Die im Filament stattfindende Wasserverdampfung wird durch die im Filament befindliche Wärmemenge ermöglicht, wodurch eine starke Abkühlung, mehr als beim Schmelzspinnen, erfolgt. In einer weiteren Feststellung wird dargestellt, dass die im NMMO-Verfahren eingesetzte Spinnmasse aus einem Non-Solvent (Wasser) einem Solvent (Aminoxid = NMMO) sowie Cellulose besteht. Der Autor kommt letztendlich zum Schluss, dass das Lösungsmittel während des Formgebungsprozesses nicht verdampft.

Erfindungsgemäß wurde festgestellt, dass die Extrusion und anschließende Kühlung zu unerwünschter Partikelbildung und Ablagerungen am Extruder oder zu Verunreinigungen der einzelnen Spinnfäden führen kann. So können sich beispielsweise einzelne Bestandteile der Formmasse als feste Partikel unmittelbar nach Extrusion und Kühlung aus den noch fluiden Spinnfäden herauslösen und die Apparatur oder die Qualität des Produktes beeinträchtigen. Der vorliegenden Erfindung liegt die Aufgabe zugrunde verbesserte Extrusionsverfahren zur Verfügung zu stellen, die diese Nachteile vermeiden können.

Die vorliegende Erfindung liefert daher ein Verfahren zur Herstellung von festen Materialfilamenten aber auch Materialfolien oder -filmen aus einem Fluid des Materials durch Ausformen des Fluids, durch Pressen des Fluids, durch eine oder mehrere Extrusionsöffnungen und Verfestigen des Materials in einem Auffangbad, wobei das geformte Material zwischen der/den Extrusionsöffnung(en) und dem Auffangbad durch einen seitlichen Gasstrom geführt wird, wobei der Gasstrom in einen Heizteilstrom und einen Kühlteilstrom unterteilt ist, und wobei das Material zuerst mit dem Heizteilstrom und anschließend den Kühlteilstrom in Kontakt gebracht wird, bevor es in das Auffangbad eingebracht wird.

Weiters betrifft die Erfindung eine Extrusionsvorrichtung, im Speziellen eine Spinndüsenanordnung, zur Herstellung von festen Materialfilamenten oder -folien, mit ein oder mehreren Extrusionsöffnungen, mit einem Gasgebläse, welches über eine Vielzahl an Austrittsöffnungen zum seitlichen Beblasen eines durch die Extrussionsöffnungen gepressten Materials mit einem Gasstrom verfügt, wobei ein Teil des Gasstroms als Heizteilstrom und ein weiterer Teil als Kühlteilstrom geführt ist, und mit mindestens einem Heizelement zur Beheizung des Gasstroms im Heizteilstrom. Die Vorrichtung kann zur Durchführung des erfindungsgemäßen Verfahrens verwendet werden.

Der Heizteilstrom ist ein geheizter Teilstrom des Gasstroms. Dadurch wird verhindert, dass das Material bzw. Teile davon in einen festen Zustand übergehen und sich Ablagerungen an den Extrusionsöffnungen oder an den Spinnfäden bilden oder im Bereich zwischen den Extrusionsöffnungen und dem Auffangbad durch den Gasstrom herausgeschleuderte Partikel, wie Kristallisationsprodukte oder Oligomere, ablagern. Der Kühlteilstrom ist ein kühlender Teilstrom des Gases, z.B. bei Lufttemperatur. Vorzugsweise ist die Temperatur des Heizteilstroms über der Schmelztemperatur der erwarteten Partikel. Im Fall eines Fluids von Cellulose-NMMO-Wasser, welches üblicherweise bei Temperaturen von 80°C bis 115°C extrudiert wird, werden Partikel aus NMMO-Hydrat erwartet. Der Heizteilstrom sollte daher eine Temperatur von mindestens 75°C aufweisen. Der Bereich des Kühlteilstroms und des Heizteilstroms grenzen unmittelbar aneinander an, sodass in Extrusionsrichtung das extrudierte Material keine wesentlichen Turbulenzen oder Unterschiede in der Gasstromgeschwindigkeit erfährt. Dadurch wird ein sanfter Übergang in den Kühlstrombereich erzielt, der Ablagerungen und das Herausbrechen verfestigter Partikel aus dem Material verhindert. Im Kühlteilstrom wird die Klebrigkeit des Materials noch in der fluiden Phase zwischen den Extrusionsöffnungen und dem Auffangbad (einem "Fällbad" zur Verfestigung des Materials) vermindert. Dieses Abkühlen soll jedoch nicht unmittelbar nach den Extrusionsöffnungen stattfinden, da sich gezeigt hat, dass dadurch Ablagerungen und Verstopfungen der Öffnungen auftreten können. Insbesondere hat sich gezeigt, dass sogar ein Beheizen in diesem Bereich vor den Öffnungen vorteilhaft ist.

In der Regel werden heiß schmelzende oder heiß lösliche Materialien verwendet. Die Temperatur des Materials an den Extrusionsöffnungen kann zwischen 70 und 130°C liegen. Der Heizteilstrom wird vorzugsweise bei heißen Temperaturen mit maximal 20°C, insbesondere bevorzugt maximal 10°C oder 5°C, Unterschied zur Temperatur des Materials an den Extrusionsöffnungen vorbeigeführt. Die Temperatur des Kühlteilstroms ist vorzugsweise zwischen 0 und 50°C.

Die Ausführungsformen der vorliegenden Erfindung zeichnen sich im Speziellen durch einen kontrollierten Gasfluss durch den Bereich zwischen Extrusionsöffnung und Auffangbad aus. Dadurch kommt es zur Ausbildung des Heizteilstroms und des Kühlteilstroms. Der Gasstrom sollte laminar bzw. nicht turbulent sein um ein Vermischen der Teilströme zu verhindern oder es zu keiner wesentlichen Durchmischung der Teilströme kommt. Durch kontrollierte Strömung bilden sich einzelne Gasführungsbereiche, insbesondere der Heizteilstrom und der Kühlteilstrom. Das Gas ist vorzugsweise ein beliebiges inertes Gas, welches nicht mit dem Material reagiert, vorzugsweise Luft. Die einzelnen Teilströme des Gasstroms, insbesondere der Heizteilstrom und der Kühlteilstrom, führen mit im Wesentlichen gleicher Geschwindigkeit am extrudierten Material vorbei. Die Extrusionsrichtung ist ungefähr normal zur Strömungsrichtung des Gases. Die Gasströmung wird nur von einer Seite auf das geformte Material zugeführt.

Der Bereich zwischen Extrusionsöffnung und Auffangbad, in dem das Material noch fluid ist, wird auch als Liquidusbereich bezeichnet. Durch Eintritt in das Auffangbad wird das Material verfestigt. Man spricht von einem Solidusbereich. Erfindungsgemäß werden vorzugsweise keine Abschirmbereiche ohne Gasfluss im Liquidusbereich vorgesehen.

Zur Erzielung eines laminaren Gasstroms entlang der Extrusionsvorrichtung kann ein Führungselement vorhanden sein. Damit kann der Gasstrom entlang der Extrusionsöffnungen laminar vorbei geführt werden, selbst wenn dieser in einer gekrümmten Bahn (z.B. bei einem gekrümmten oder gewölbten Extrusionsöffnungsbereich am Extruder) geführt wird. In der Regel wird auch über dem Auffangbad, über der Soliduslinie, der Gasstrom in einer gekrümmten Bahn geführt, in Abhängigkeit des Gasstroms über der Extrusionsvorrichtung.

Vorzugsweise wird der Bereich zwischen den Extrusionsöffnungen und dem Auffangbad im Wesentlichen vollständig durch den seitlichen Gasstrom gespült. Dadurch werden Turbulenzen an den Rändern des Gasstroms vermieden. Ebenso wird die Durchführung des geformten Materials durch verschiedene Gaszonen mit unterschiedlichen Stömungsgeschwindigkeiten, inklusive stehender Gase, vermieden.

Vorzugsweise ist das Gebläse zur Extrudierrichtung in einem spitzen Winkel angeordnet. In einem leicht geneigten Winkel zur Exttrudierrichtung erhält der Gasstrom eine Strömungskomponente in der Extrudierrichtung, womit ein sanfterer Verlauf des verfestigenden Materials erzielt wird. Dies ist eine weitere Maßnahme, um das Herausreißen von verfestigenden Partikeln, z.B. diverser Additive, aus dem Materialstrom zu verhindern. Durch ein entsprechendes Führungselement kann das Gas laminar um den Extruder trotz geneigter Anströmrichtung geführt werden. Geeignete Führungselemente sind beispielsweise Prallbleche oder Abzüge, mit oder ohne Unterdruck/Ansaugen. Der spitze Winkel kann beispielsweise kleiner als 85°, insbesondere kleiner als 80°, kleiner als 75°, kleiner als 70°, kleiner als 65°, kleiner als 60°, kleiner als 55° sein. Der spitze Winkel ist vorzugsweise mindestens 30°, mindestens 35°, mindestens 40°, mindestens 45°, mindestens 50°, mindestens 55°, mindestens 60°, mindestens 65°, mindestens 70°, mindestens 75°. Durch diesen spitzen Winkel der Gebläseanordnung ergibt sich zudem ein Staudruck an der Oberfläche des Auffangbads, wodurch das darin enthaltene Medium gebläseseitig/anstromseitig absenkt. Dadurch ergeben sich für die Fluide (Spinnfäden) anstromseitig und abstromseitig unterschiedliche Verweilzeiten im Gebläsestrom. Dies optimiert die unterschiedlichen Verweilzeiten bei unterschiedlichen Viskositäten der Fluide aufgrund unterschiedlicher Temperaturen anstromseitig (meist kühler) und abstromseitig (wärmer aufgrund des durch das Fluid erwärmten Kühlgasstroms).

Zusätzlich ist es möglich das extrudierte Fluid in einem spitzen Winkel auf das Auffangbad einströmen zu lassen. Durch derart schräg angeordnete Extrusionsöffnungen (Spinndüse) erfahren die Spinnfäden vom Gebläse abstromseitig bzw. anstromseitig unterschiedliche Verweilzeiten im Gasstrombereich. Anstromsitig werden die Fäden stärker gekühlt als abstromseitig, wodurch sich unterschiedliche Viskositäten des Fluids ergeben. Vorzugsweise sind diese Verweilzeiten länger im Fall von höherer Viskosität (meist anstromseitig) als bei niedrigeren Viskositäten (meist abstromseitig). Der spitze Winkel ist vorzugsweise mindestens 10°, mindestens 20°, mindestens 30°, mindestens 40°, mindestens 50°, mindestens 60°, mindestens 70°, mindestens 80°, bzw. kleiner als 85°, insbesondere kleiner als 80°, kleiner als 75°, kleiner als 70°, kleiner als 65°, kleiner als 60°, kleiner als 55°. Vorzugsweise ist der Winkel zwischen 10 und 45°.

Vor der Extrusion durch die Extrusionsöffnungen kann das Material in einer Extrussionskammer gesammelt und/oder temperiert werden. Vor der Extrusion können z.B. in der Kammer noch Additive dem Material beigemengt werden. Vorzugsweise ist die Extrusionskammer durch ein Heizelement, z.B. durch ein Wärmemedium, welches in Heizkanälen geführt wird, beheizt. Dieses oder ein weiteres Heizelement kann auch dazu benutzt werden die Extrusionsöffnungen zu beheizen. Die Öffnungen können in eine Extrusionsplatte aufgenommen sein, welche vorzugsweise über ein Heizelement verfügt. Vorzugsweise ist der Wärmeleitkoeffizient der Extrusionsplatte im Bereich des Wärmeleitkoeffizienten von Metallen, z.B. kann er zwischen 5 bis 100 W/mK, vorzugsweise 10 bis 60 W/mK betragen. Die Extrusionsplatte, das Material des Gebläses - insbesondere die Trennwände zwischen den einzelnen Austrittsöffnungen des Gebläses - können aus verschiedenen Materialien hergestellt sein, wie Stahl, Edelstahl, Keramik, Sintermetallen, Aluminium, Kunststoff, Buntmetallen oder Edelmetallen. Bevorzugte Werkstoffe sind alle Eisen, Eisenlegierungen, ChromNickelstähle, Nickelstähle (z.B. Hastelloy Materialien), Titan, Tantal, Siliziumcarbid, Glas, Keramik, Gold, Platin und auch Kunststoffe. Spezielle Materialien sind Legierungen mit hohem Molybdängehalt bzw. Nickel, Chrom und Molybdän-Legierungen zur Beständigkeit gegen Lochfraß und Spaltkorrosion oder Nickel-Kupfer-Legierungen mit hoher Zugfestigkeit. Materialbeispiele sind Hastelloy C (hohe Korrosionsfestigkeit), Hastelloy B (ausscheidungshärtende Hochtemperaturlegierung), Inconel (Beständigkeit gegen Spannungskorrosionsrisse in petrochemischen Anwendungen), Incoloy (hohe Festigkeit als auch Beständigkeit gegen hohe Temperaturen und gegenüber Oxidierung und Aufkohlung), Monel (hohe Zugfestigkeit, beständig gegenüber Korrosion) . Vorzugsweise wird ein Material mit einer Wärmeleitfähigkeit von 5 bis 100 W/mK, speziell bevorzugt von 10 bis 60 W/mK, gewählt.

Die Extrusionsplatte kann beliebig an der Extrusionsvorrichtung befestigt sein, inklusive ablösbarer Befestigungen zum einfachen Austausch der Platte. Weiters kann die Platte angeschweißt, angeklebt oder angeflanscht oder durch Klemmen oder Nieten befestigt sein. Die Extrusionsplatte kann weiters beschichtet sein, insbesondere zum Abweisen des extrudierten Materials oder zum besseren Übertragen von Wärme.

Vorzugsweise hat die Extrusionsplatte eine Dicke von maximal 20 mm, speziell bevorzugt maximal 15 mm, maximal 12 mm, maximal 10 mm, oder maximal 8 mm.

Vorzugsweise wird der beheizte Teilstrom durch eine Extrusionsplatte mit den Extrusionsöffnungen und/oder durch ein Heizelement in einem Gebläse beheizt.

Das Gebläse enthält vorzugsweise eine Vielzahl an Austrittsöffnungen für den Gasstrom. Beispielsweise können mehrere Kanäle im Gebläse hierzu vorgesehen werden. Diese Kanäle sind vorzugsweise eng anliegend, wie z.B. in einer Wabenform. Zur Ausbildung eines Heizteilstroms kann eine Seite des Gebläses beheizt werden, wobei durch die Abtrennungen der Kanäle die Heizwärme zu einem gewissen Grad, kontinuierlich abnehmend, weiterleiten kann. Die Kanäle, welche zum Kühlteilstrom führen, sollten so Großteils ungeheizt bleiben bzw. auf die gewünschte niedere Temperatur geheizt.

Vor der Extrusion, vor den Extrusionsöffnungen bzw. in der Extrusionskammer wird das fluide Material zu hohen Drücken gepresst, z.B. durch eine Pumpe. In speziellen Ausführungsformen ist der Druck mindestens 100 bar, vorzugsweise mindestens 200 bar, mindestens 300 bar, mindestens 400 bar, mindestens 500 bar, mindestens 600 bar, mindestens 700 bar, mindestens 800 bar.

Vorzugsweise werden in Richtung des seitlichen Gasstroms mehrere Extrusionsöffnungen vorgesehen. Die Extrusionsöffnungen können auf einer bombierten, d.h. gewölbten, Extrusionsplatte vorgesehen werden, wobei vorzugsweise der Wölbungwinkel a am Rand der Extrusionsplatte zur Extrudierrichtung ein spitzer Winkel ist. Der Wölbungwinkel a ist vorzugsweise kleiner als 85°, insbesondere kleiner als 80°, kleiner als 75°, kleiner als 70°, kleiner als 65°, kleiner als 60°, kleiner als 55°. Vorzugsweise wird dies Ausführungsform mit dem genannten Führungselement zur Ab- und/oder Zuleitung des Gasstroms kombiniert. So wird der Gasstrom entlang des bombierten bzw. gewölbten Bereichs an der Extrusionsplatte entlang geleitet. Durch eine Wölbung kann die das Profil der Anbringung der Extrusionsöffnungen dem Profil der Oberfläche einer Flüssigkeit im Auffangbad angepasst werden. Durch Einströmung des Materials in das Auffangbad wird dort die Oberfläche der Flüssigkeit gekrümmt, wodurch bei flacher Führung der Extrusionsöffnungen die mittleren Materialstrahle eine längere Wegzeit benötigen als die äußeren. Dadurch können Inhomogenitäten durch unterschiedliche Verweilzeiten im Kühlteilstrom entstehen. Diese werden erfindungsgemäß vermieden.

Das Material, welches erfindungsgemäß durch Extrusion geformt wird, kann eine thermoplastische Masse sein, insbesondere ein viskoses Fluid. Vorzugsweise ist das Material ausgewählt aus einer Zellulose-Lösung, erstarrbare Fluide, insbesondere "hot-melts", wie Polymere, Polycarbonate, Polyester, Polyamide, Polymilchsäure, Polypropylen, etc.. Zellulose-Lösungen sind insbesondere Cellulose-Aminoxid-Lösungen, im Speziellen Lösungen von tertiären Aminoxid-Lösungen. Ein Beispiel ist eine Cellulose-NMMO-Lösung, wie in der US 4,416,698 oder der WO03/057951 A1 beschrieben. Vorzugsweise werden Celluloselösungen im Bereich von 4 bis 23% Cellulose für die Verarbeitung zu Extrusionsprodukten eingesetzt.

Das Material kann eine wässrige Lösung sein. Das Material kann ein thixotropes Fluid, insbesondere eine Spinnlösung, sein. Spezielle Materialien haben eine Schmelztemperatur von mindestens ca. 40°C, mindestens 50°C, mindestens 55°C, mindestens 60°C, mindestens 65°C, mindestens 70°C, mindestens 75°C. Das Material kann bei beispielhaften Temperaturen von mindestens ca. 40°C, mindestens 50°C, mindestens 55°C, mindestens 60°C, mindestens 65°C, mindestens 70°C, mindestens 75°C, mindestens ca. 80°C, mindestens 85°C, mindestens 90°C, mindestens 95°C, geführt werden. Vorzugsweise ist die Nullscherviskosität des Fluids im Bereich von 100 bis 15.000 Pas, insbesondere zwischen 500 bis 10.000 Pas.

Zur Formung des Materials können die Austrittsöffnungen in beliebiger Form gewählt werden. Möglich sind längliche Öffnungen zum Formen von Folien oder kleine, runde Öffnungen zur Formung von Filamenten oder Fäden. Vorzugsweise sind die Öffnungen maximal 2 mm, maximal 1,5 mm, maximal 1,2 mm, maximal 1,1 mm, maximal 1 mm schmal bzw. im Durchmesser. Die Öffnungen können mindestens 0,1 mm, mindestens 0,2 mm, mindestens 0,3 mm, mindestens 0,4 mm, mindestens 0,5 mm, mindestens 0,6 mm, mindestens 0,7 mm, mindestens 0,8 mm, mindestens 0,9 mm schmal bzw. im Durchmesser sein. Nach dem Austritt ist das Material zwar in geformten Zustand aber noch in fluider Phase.

Im Auffangbad können Medien, Flüssigkeiten und/oder Temperaturen vorgesehen werden, in denen das Material verfestigt. Beispielsweise können Flüssigkeiten oder Lösungen verwendet werden, in denen das Material nicht löslich ist und somit ausfällt. Alternativ oder zusätzlich können niedere Temperaturen gewählt werden, bei denen sich das Material verfestigt. Durch ein zumindest zeitweises kontinuierliches Ausfällen können die erfindungsgemäßen Filamente, Fäden oder Folien erzeugt werden. Die Filamente, Fäden oder Folien können kontinuierlich oder diskontinuierlich aus dem Auffangbad ausgetragen werden. Das Medium bzw. die Flüssigkeit im Auffangbad kann ebenso kontinuierlich oder diskontinuierlich erneuert werden. Das Auffangbad kann auf eine bestimmte Temperatur temperiert werden, z.B. durch Heiz- oder Kühlelemente oder durch Steuerung des Mediumwechsels.

Die vorliegende Erfindung wird weiters durch die folgenden Figuren und Beispiele illustriert ohne auf diese speziellen Ausführungsformen der Erfindung beschränkt zu sein.

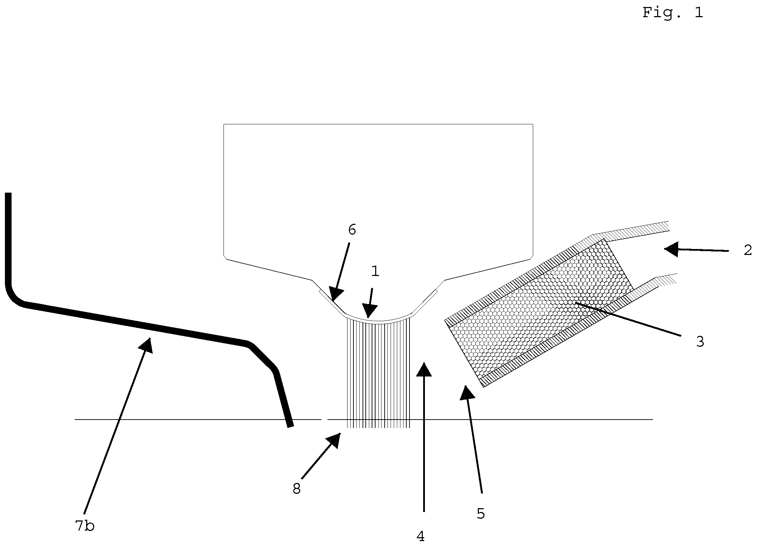

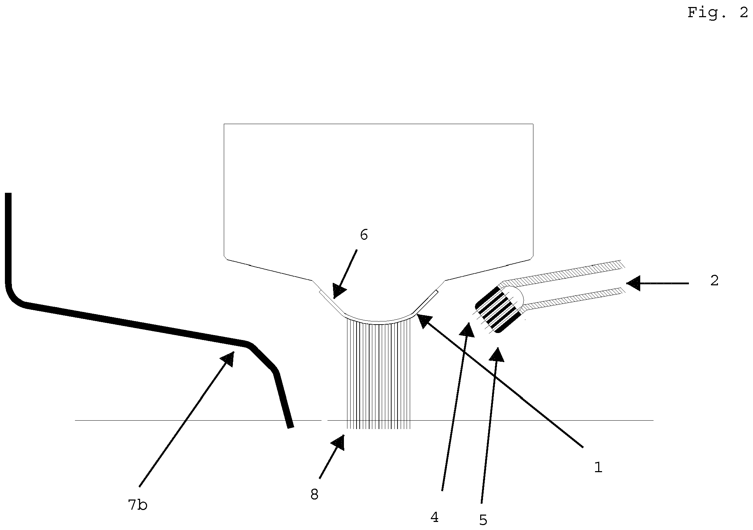

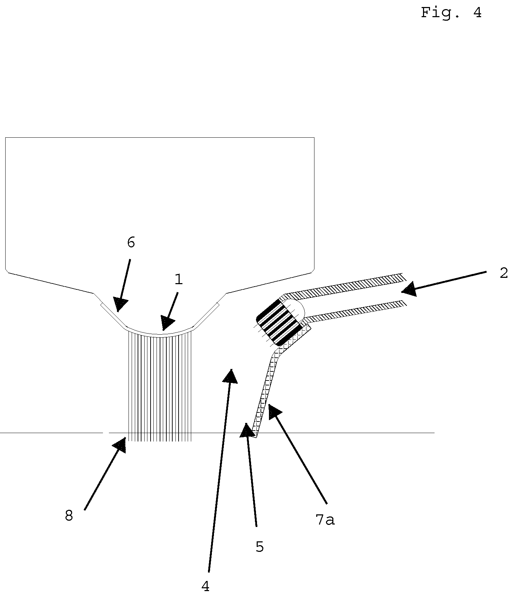

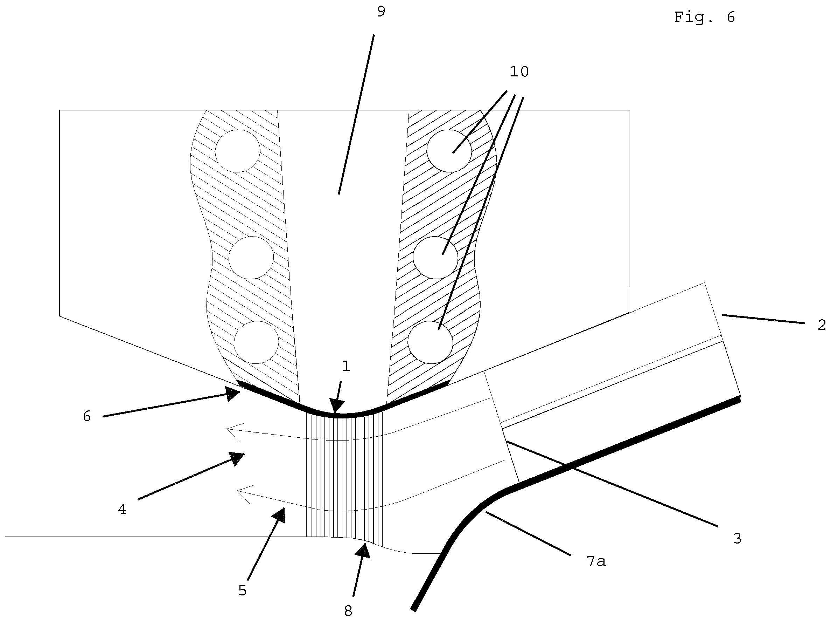

Die Figuren 1 bis 6 zeigen verschiedene Extrusionsvorrichtungen mit einer Extrusionskammer 9 mit Extrusionsöffnungen 1, einem Gebläse 2 mit Gasstrom-Austrittsöffnungen 3, dessen Gasstrom einen Heizteilstrom 4 und einen Kühlteilstrom 5 bildet. Die Extrusionsöffnungen 1 sind auf einer in Richtung des Gasstroms gewölbten Extrusionsplatte 6 vorgesehen. Durch Punkt 8 wird der Eintritt in ein Auffangbad gekennzeichnet. Die Extrusionsvorrichtung verfügt weiters über ein oder mehrere Stromführungselemente 7, welche anstromseitig (a) und/oder abstromseitig (b) vorgesehen werden können. In Figur 1 sind die Gasstrom-Austrittsöffnungen 3 durch ein Wabenprofil schematisch dargestellt, welches in Richtung des extrudierten Materialstroms gerichtet wird. Im Extruder können Heizelemente 10, hier Wärmeträgerleitungen, aufgenommen werden.

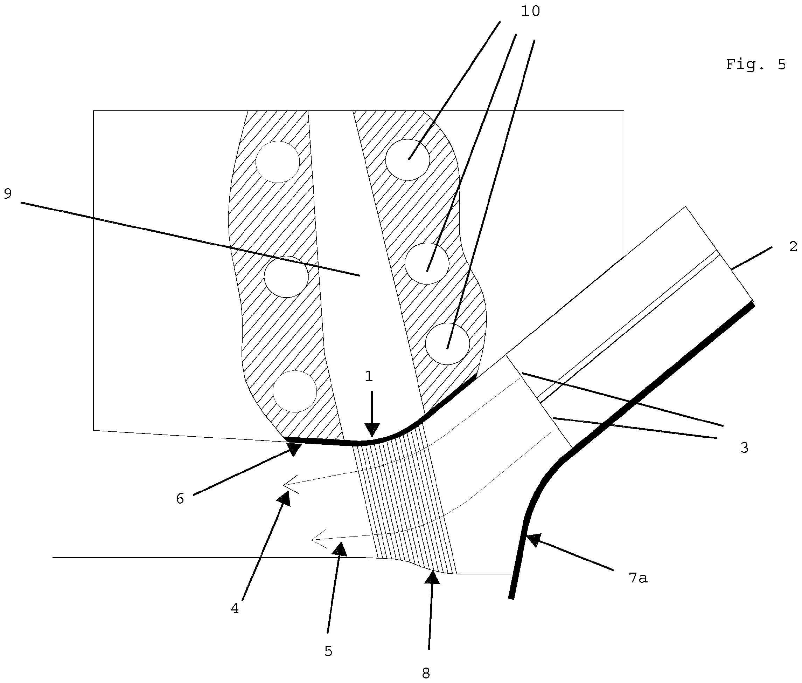

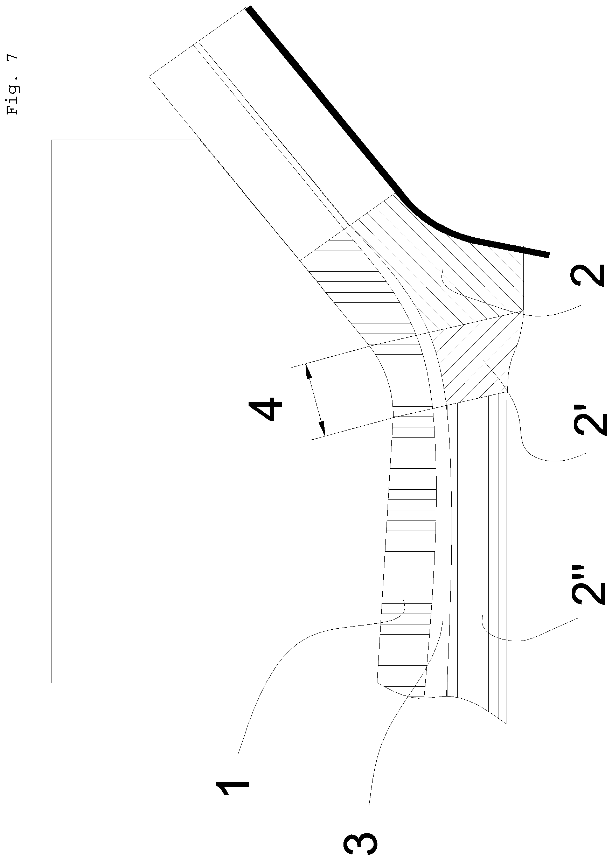

Figur 7 zeigt ein Wärmeprofil der Gase in den einzelnen Bereichen während dem Betrieb einer Vorrichtung gemäß Fig. 5. Bereich 1 zeigt eine relativ gleichbleibende Temperatur (90°C) des Heizteilstroms vom Gebläse, über den Spinnbereich 4 bis zur Abluft (adiabat). Der Kühlteilstrom ist zunächst im Bereich 2 gekühlt (25°C) und erwärmt sich graduell durch Kontakt mit der Spinnmasse in Behandlungsbereich 2'. Im Abgasstrom 2" ist daher die Temperatur auf etwa 50-60°C erhöht. Zwischen dem Heizteilstrom und dem Kühlteilstrom ist ein Übergangsbereich 3 mit mittlerer Temperatur.

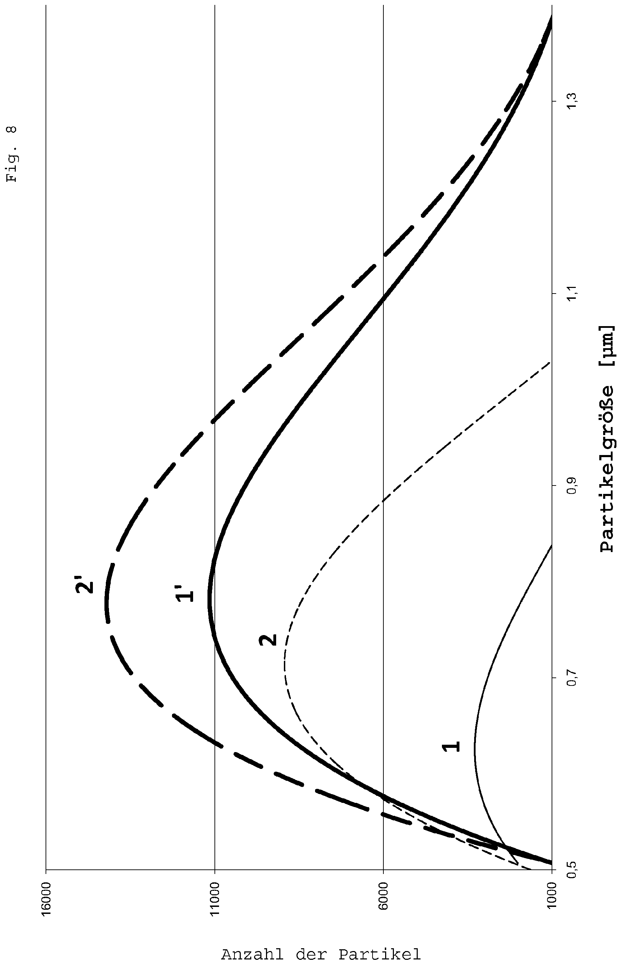

Fig. 8 zeigt eine Partikelgrößenverteilung für verschiedene Positionen der Aerosolmessung Kurve 1 und 1' entspricht der Partikelverteilung im Bereich der Spinndüse (1) und 200 mm düsenabstromseitig (1') für eine erfindungsgemäße Konfiguration mit Heizteilstrom und Kühlteilstrom. Kurve 2 und 2' entspricht der Partikelverteilung im Bereich der Spinndüse (2) und 200 mm düsenabstromseitig (2') für eine Vergleichskonfiguration mit nur einem einheitlichen Kühlstrom ohne Heizteilstrom. Aufgrund der Beheizung nach Düsenaustritt der Spinnmasse wurde das Anfallen schädlicher Partikel erheblich reduziert (Kurve 1).

### Beispiel:

Gemäß diesem Beispiel wird eine Extrusionsvorrichtung, wie in Fig. 1 dargestellt, eingesetzt. In dieser Form enthält eine Extrusionsvorrichtung eine in Richtung des Gasstroms gewölbte Extrusionsplatte 6, mit einem Profil an Extrusionsöffnungen 1, welches das Profil der Oberfläche eines Wasserbads als Auffangbad bei Einströmen des Materialfluids wiedergibt. Durch Extrusion unter Druck wird das Materialfluid durch die Form der Extrusionsöffnungen geformt, beispielsweise in Filamente und durch Passieren des Gasstroms weiters gestreckt. Durch Abkühlung wird die Klebrigkeit reduziert um ein Verkleben bei Eintritt in das Wasserbad zu verhindern.

Ein seitlicher Gebläseluftstrom wird in einen Heizbereich und einen Kühlbereich durch Beheizen des oberen Teils des Gebläses sowie der Extrusionsplatte erzielt. Das Gas wird durch ein Prallblech als Stromführungselement abgeleitet um eine laminare Strömung im Bereich des Materialflusses zu bewahren.

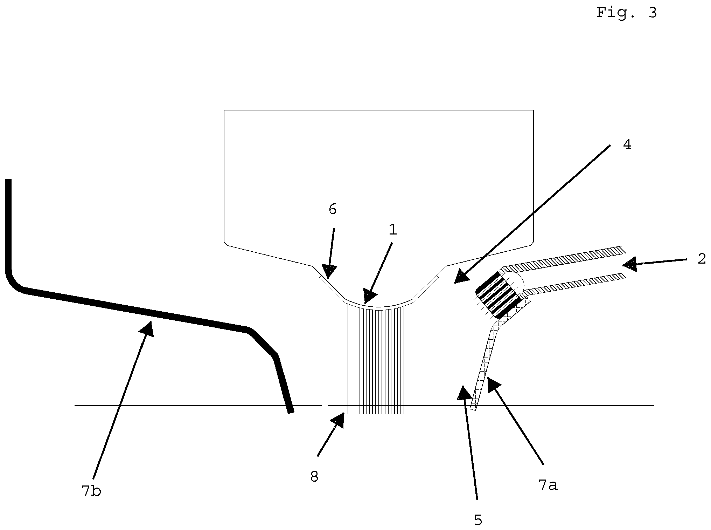

Im Betrieb wurde eine Extrusionsvorrichtung gemäß Fig. 3 beim Spinnen von Zellulosefilamenten mit einer Cellulose-NMMO- Wasser Lösung getestet.

### Analyse der Zustände im Luftspalt

Eine Spinnlösung (Cellulose: 12,9%, NMMO 76,3%, Wasser 10,8%, alle % in gew.-%) wird durch Mischen einer wässrigen Aminoxidlösung und Cellulose dadurch hergestellt, dass man in einem dem Spinnprozess vorgelagerten Verdampfungsprozess überschüsssiges Wasser entfernt, wobei sich die Cellulose (das Polymer) im aufkonzentrierten Lösungsmittel zu einer Polymermasse löst. Bereits bei diesem Lösungsherstellungsvorgang, welcher bei Unterdruck durchgeführt wird, wurde festgestellt, dass sich im Verdampfungsprozess über die Gasphase NMMO, NMM (N-Methylmorpholin = Zersetzungsprodukt von NMMO) und M (Morpholin = Zersetzungsprodukt von NMMO und NMM, NMMO = N-Methylmorpholin-N-Oxid) sowie Wasser abscheiden lässt.

Im Spinnprozess kommt es durch die Extrusion der Spinnmasse zu einer Expansionsverdampfung, weil die der Extrusionsdüse zugeführte Spinnmasse unter einem entsprechenden Förder- und Extrusionsdruck steht und dieser Extrusionsdruck nach Austreten des jeweiligen Schmelzepartikels aus der Spinndüsenbohrung auf den Anlagen-Umgebungsdruck abgebaut wird. In einem NMMO Verfahren sind Spinndrücke bis zu 250 bar, je nach Zusammensetzung (Cellulosekonzentration der Spinnlösung) üblich. Durch die zuvor erwähnte Expansionsverdampfung bzw. durch die Druckentlastung der Spinnlösung von hohem Druckniveau, bei Temperaturen von 90 bis 110°C auf niedriges Druckniveau (niedrigere Umgebungstemperatur) ergibt sich eine heftige Siedebewegung der lösungsvermittelnden Komponenten (NMMO und H2O) im Filament. Die sich bildenden Dampfblasen steigen aus der Cellulose-Lösung aus (Flash-Vaporisation). Die austretenden Partikel treten daher stark beschleunigt in den Luftspaltraum ein.

Durch die Expansion (Verdampfung der lösungsvermittelnden Komponente wird dem Spinnlösungsstrom die zur Verdampfung der lösungsvermittelnden Komponenten notwendige Energie entzogen, wobei sich infolge des Energieentzugs das Filament von selbst abkühlt. Überraschenderweise wurde festgestellt, dass nicht nur Wasser (Simon, Int. J. Heat Mass Transfer. Vol. 37, No. 7, pp. 1133 - 1142, 1994) sondern auch NMMO, NMM und M aus der Spinnlösung abgedampft wird.

Nachdem die Zusammensetzung der lösungsvermittelnden Komponente in der Spinnlösung (NMMO - Hydrat) in einem derartigen Verhältnis steht, dass die verdampfte lösungsvermittelnde Komponente (NMMO - Hydrat) bei Temperaturbedingungen unter 75°C in Kristallform übergeht, wurde die Partikelbildung während und nach dem Spinnprozess beobachtet und versucht diese durch Modifizierung der Prozessparameter zu steuern, um das Mikroklima im Luftspaltbereich für einen optimal laufenden Spinnprozess zu gestalten.

Um die Ausschleusung der verdampften lösungsvermittelnden Komponente (NMMO - Hydrat) zu ermöglichen, muss daher der Bereich der Spinndüsenoberfläche einerseits freigespült, und andererseits auf einer Temperatur von mindestens 75 °C gehalten werden um keine Kristallisation der verdampften lösungsvermittelnden Komponente (NMMO- Hydrat) im Nahbereich der Spinndüsenoberfläche zuzulassen.

Abtransportierte Aerosole und Kristalle wurden im Abströmbereich der Düse festgestellt, die im Anströmbereich der Düse nicht vorhanden sind. Diese Aerosole bestehen neben den gasförmigen Komponenten wie Luft, NMM und M auch aus der Verbindung NMMO-Hydrat gebildet (Monohydrat). Es gibt verschiedene Formen des Monohydrats.

### Probenahme aus Düsenspülgas:

Die Probenahme des Spinngases an der Abluftseite, welches mit Aerosolen beladen ist, hatte möglichst repräsentativ und verlustfrei zu erfolgen. Dies geschah mit einer Messsonde, wobei die Sonde nach VDI2066 ausgelegt wurde. Die Auslegung erfolgte individuell, damit eine isokinetische Probenahme gewährleistet war.

Die Probenahmeleitung wurde unterhalb der Spinndüse eingeführt, wobei die Positionierung der Sonde über die Höhe des Luftspaltes, sowie über den Abstand der Probennahmesonde vom Düsenmittelpunkt variiert wurde.

### Durchführung der Messung:

Die Messung an dem aus dem Spinnprozess ausgestoßenen Aerosol wurde mit einem optischen Partikelzähler - Type SMPS (Scanning Mobility Particle Sizer™ Spectrometer) der Firma TSI durchgeführt.

Bei diesem Verfahren werden die Partikel elektrisch geladen und anschließend in einem Differentiellen Mobilitäts-Analysator (DMA) fraktioniert. Die Fraktion wird mit einem Kondensationskernezähler gezählt. Durch Variation der Steuerspannung am DMA können im Prinzip beliebige Fraktionen aus dem Aerosol isoliert und gezählt werden. Dadurch erhält man schrittweise die gesamte Verteilung.

Der Kondensationskernezähler kann Partikel ab ca. 3 Nanometer Durchmesser detektieren. In der Partikelgröße ist das System nach oben hin auf ca. 1 Mikrometer Partikeldurchmesser begrenzt.

Die Probenahme erfolgte gemäß VDI 2066 mit einer aus Stahl (1.4301) gefertigten Sonde, die ummantelt und als Gegenstromwärmetauscher ausgeführt war. Es konnten Temperaturen zwischen 0°C und 60°C eingestellt werden, wobei der gezogene Spinngas-Volumenstrom zwischen 3m/s und 4 m/s eingestellt wurde.

Die Luftzuführung an die Spinndüse wurde in dichter Form an der Längsseite der Düse angebracht und die Spinndüse seitlich verblendet, damit Querströmungen durch Zug ausgeschlossen werden konnten.

Ebenso wurde die Fällbadoberfläche an der Anströmseite sowie der Abstromseite seitlich abgedeckt, damit keine Feuchtigkeit während der Messung gezogen werden konnte.

Für die chemische Analyse des gezogenen Aerosolproduktes wurden auch Filtermessungen durchgeführt um die Partikel neben der Größenanalyse auch massenmäßig zu analysieren. Für die Filtermessungen wurden PTFE Membranen mit Porendurchmessern von 200 bis 300 Nanometer verwendet.

Die Messsonde wurde auf 18°C eingestellt. Die Spinngastemperatur betrug in diesem Falle ca. 60°C. Die Sonde wurde nicht tiefer gekühlt um Kondensatbildung durch gezogene Feuchtigeit aus der Raumluft zu vermeiden, da gemäß der der Erfindung zugrunde liegenden These (Abscheidung von NMMO-Monohydrat Kristallen aus der Spinn-Polymerlösung) eine Zufuhr von Feuchtigkeit über die Kondensatbildung zur Auflösung der NMMO-Monohydratkristalle geführt hätte und keine Messung der Partikelgröße und Anzahl möglich gewesen wäre.

Fig. 8 zeigt eine Partikelgrößenverteilung für verschiedene Positionen der Aerosolmessung in einer Anordnung gemäß der Erfindung (1) und einer Vergleichsanordnung (2). Aus Fig. 8 lässt sich ableiten, dass mit größerem Düsenabstand die Häufigkeit der Partikel im Aerosol zunimmt. Daraus ist abzuleiten, dass die Partikel aus einem Kondensations-/ Kristallisationsprozess stammen müssen, wobei die Kristallisation bzw. die Häufigkeiten der Partikel mit größerem Abstand zur Düse zunimmt.

Dadurch, dass die Sonde auf 18°C gekühlt wurde, wodurch sich keine Wasserkristalle bilden konnten, zeigen die Messergebnisse eindeutig das Vorhandensein von kondensierbaren bzw. kristallisierbarem Aerosolen. Das Kristallisationsprodukt ist auf eine NMMO-Hydrat-Verbindung zurückzuführen. Der Wasseranteil in der NMMO-Hydratverbindung beträgt nur ca. 13%.

Durch die erfindungsgemäße Anordnung der Behandlungszonen der Spinnfäden im Luftspalt und Versorgung mit entsprechendem Spülgas kann das Mikroklima derart beeinflusst und eingestellt werden, dass die Nukleation bzw. Kristallisation der NMMO - -Hydrat- Verbindung (Kristallverbindung) im Bereich der Extrusionsöffnungen verhindert, verzögert werden kann.

Durch geschichtete Spülgasführung im Spinnspalt wird durch den Abtransport der Aerosole - Nukleationskerne die frei werdende Kristallisationswärme von NMMO-Hydrat aus dem Spinnraum geführt.

Starkes Kühlen im Bereich des Luftspaltes, vor allem aber unmittelbar nach dem Formen führt dazu, dass eine vermehrte Kristallisation des zuvor verdampften NMMO-Hydrats unmittelbar nach dem Austreten aus der Extrusionsöffnung auftritt, wodurch die Kristallisationswärme in den Gasraum eingetragen wird und die frei werdende Wärme den Gasraum erwärmt, bzw. in Folge den Spinnprozess negativ beeinflusst.

### Ergebnisse der Aerosol - Filterproben

Während der Messungen zeigte sich, dass das aus dem Spinngas filtrierte Material die Filterporen der PTFE Filtermembran schnell verblockt.

Über lichtmikroskopisch durchgeführte Untersuchungen konnte ebenfalls NMMO Monohydrat als kristallisiertes Produkt festgestellt werden.

Diese Beobachtungen decken sich auch dahin gehend, dass bei einer kontinuierlich betriebenen Spinnvorrichtung im Abstrom-, aber auch in einem nicht optimal konstruierten Anstrombereich, besonders bei Verwendung von Freistrahlbeblasungen, NMMO - Monhydrat kristallisiert und dort Ablagerungen bildet.

In weiteren Vergleichsversuchen wurden die Auswirkungen auf die Partikelzahl sowie auf das Spinnverhalten der Cellulosefäden untersucht. Die einzelnen Prozessparameter sind in Tabelle 1 zusammengefasst.

**Tabelle 1:**

| **Beispiel** | | **1** | **2** | **3** | **4** |
|---|---|---|---|---|---|
| Spinnmasse -Durchsatz | g/min je Loch | 0,019 | 0,032 | 0,034 | 0,034 |
| Spinndruck | bar | 17,100 | 46,000 | 27,000 | 29,500 |
| Temperatur Spinnmasse | °C | 105 | 89 | 89 | 87 |
| Spinnmasse - spez. Volumen bei Spinndruck u. Spinntemperatur unter Kühlung | ccm/g | 0,895 | 0,862 | 0,879 | 0,881 |
| Spinnmasse - spez. Volumen (1bar und Spinntemperatur) | ccm/g | 0,932 | 0,932 | 0,932 | 0,932 |
| Spinnmasse -Volumenänderung | % | **4,13%** | **8,12%** | **6,03%** | **5,79%** |
| Abzugsgeschwindigkeit | m/min | 41 | 37 | 39 | 39 |
| Kapillardurchmesser | µm | 100 | 65 | 80 | 80 |
| Extrusionsgeschwindigke it | m/min | 2 | 8 | 6 | 6 |
| Verzugsverhältnis | | 20 | 5 | 7 | 7 |
| Lochdichte | | 2,81 | 2,70 | 3,18 | 2,95 |
| Oberflächentemperatur der Düse | °C | 98 | 92 | 89 | 94 |
| Luftspalthöhe | mm | 20 | 16 | 16 | 18 |
| Abstand zwischen Austritt aus Blaseinrichtung und letzter Reihe der Endlosformkörper | mm | 22 | 32 | 32 | 30 |
| Düsenneigungswinkel | ° | 0 | 0 | 0 | 30 |

| **Faserdaten** | | | | | |
|---|---|---|---|---|---|
| Titer | dtex | 0,74 | 1,39 | 1,36 | 1,38 |
| Variationskoeffizent des Titers | % | 37,8 | 21,1 | 23,1 | 9,8 |
| Spinnverhalten | 1... gut 5...schlec ht | 5 | 2-3 | 2-3 | 1 - 2 |
| Nasscheuerzahl | | 231 | 125 | 250 | 723 |

| **Spinngas-Behandlungsstrom 1** | | | | | |
|---|---|---|---|---|---|
| Volumenstrom je mm² Düsenoberfläche | Liter/St d. je mm² | 21 | 14,7 | 14,7 | 3,5 |
| Temperatur | °C | 20 | 15 | 20 | 90 |
| abs. Feuchte | g/kg | 8,00 | 8,00 | 10,00 | 12,00 |

| **Spinngas-Behandlungsstrom 2 (nur Bsp. 4)** | | | | | |
|---|---|---|---|---|---|
| Volumenstrom je mm² Düsenoberfläche | Liter/St d. je mm² | | | | 5,9 |
| Temperatur | °C | | | | 25 |
| abs. Feuchte | g/kg | | | | 12,00 |

| **Spinngas-Abgas** | | | | | |
|---|---|---|---|---|---|
| Temperatur | °C | 35-45 | 40-50 | 40-50 | 60-80 |

| **Aerosol (kristallisiertes NMMO) direkt an Düsenabstromseite** | | | | | |
|---|---|---|---|---|---|
| Partikelgröße bei Partikelmaximum | | 0,7µm | 0,65µm | 0,7µm | 0,6µm |
| Partikelanzahl bei Partikelmaximum | | ∼6.5 | ∼13.0 | ∼9.0 | ∼3.0 |

| **Aerosol (kristallisiertes NMMO) 200mm nach Düsenabstromseite** | | | | | |
|---|---|---|---|---|---|
| Partikelgröße bei Partikelmaximum | | 0,8µm | 0,8µm | 0,8µm | 0,75µm |
| Partikelanzahl bei Partikelmaximum | | ∼14.000 | ∼23.500 | ∼15.000 | ∼11.000 |

Bei den Beispielen der Übersichtstabelle 1 ist der Spinnmassedurchsatz in g/min und Loch, der in der Spinndüse befindliche Druck in bar, die Temperatur der Spinnmasse in °C, einer Spinnmasse von 12,9% Cellulose, 76,3%NMMO und 10,8% Wasser (alle %-Angaben in gew.-%) angeführt. Darüber hinaus wird in oben angeführter Tabelle das spezifische Volumen der Spinnmasse bei gegebenem Spinndruck und Spinntemperatur unter Kühlung in ccm / g, sowie das spezifische Volumen der Spinnmasse bei einem bar Umgebungsdruck und der Spinntemperatur in ccm / g angegeben. Setzt man beide spez. Volumina in Bezug, so ergibt sich die in der Tabelle angeführte Spinnmasse-Volumenänderung in %.

Über den Kapillardurchmesser der Extrusionsöffnungen in µm, die Extrusionsgeschwindigkeit in m/min ergibt sich die Abzugsgeschwindigkeit in m/min, sowie das Verzugsverhältnis. Die angeführte Lochdichte in Loch pro mm², sowie die Oberflächentemperatur in °C, die Luftspalthöhe des seitlichen Gasstroms in mm, sowie der Abstand zwischen Austritt aus der Luftzuführungseinrichtung und letzter Reihe der Endlosformkörper in mm beschreiben den Spinnraum, bzw. das Spinnfeld. Über den Düsenneigungswinkel in Grad wird dargestellt, dass das erfindungsgemäße Verfahren auch mit geneigten Düsen und mit nicht senkrechtem Eintritt in das Spinnbad geführt werden kann. Letztendlich beschreibt der Titer in dtex die gewünschte und eingestellte Feinheit (Durchmesser) des Fadens. Der Variationskoeffizient des Titers in % drückt die Qualität und Gleichmäßigkeit des Spinnverfahrens, bzw. der unterschiedlichen Beispiele aus. Zusätzlich wurde das Spinnverhalten mit den Noten 1 bis 5 bewertet, wobei 1 einem guten, und 5 einem schlechten Spinnverhalten zuzuordnen ist. Das Spinnverhalten wurde visuell bestimmt unter Berücksichtigung der Anzahl der Spinnfehler, wie Fadenabrisse und Verklebungen. Das Spinnverhalten wurde von 1 (am besten) bis 5 (am schlechtesten) eingestuft, wobei das erfindungsgemäße Verfahren gem. Beispiel 4 das beste Verhalten zeigte.

Nachdem die Qualität der ersponnenen Fasern auch über die Widerstandsfähigkeit bei nasser Scheuerung ein wesentliches Merkmal darstellt, wurde die Nassscheuerzahl als qualitätsbestimmendes Merkmal angeführt. Eine relativ niedrige Nassscheuerzahl deutet auf ein fibriläres verhalten der Oberfläche der ersponnenen Fasern hin. Im Gegensatz dazu bedeutet eine relativ höher gelegene Nassscheuerzahl ein geringeres Fibrillierverhalten an der Oberfläche der ersponnenen Fasern. Im Übrigen wurde die Nassscheuerzahl wie folgt bestimmt:
Die Nassscheuerzahl, eine die Fibrillierungsneigung charakterisierende Kenngröße, wurde mit einem Fasernassscheuerprüfgerät NP der Firma SMK Präzisionsmechanik Gera GmbH bestimmt. Die Nassscheuerzahl ist die Anzahl der Umdrehungen der Scheuerwelle bis zum Bruch der unter definierter Vorspannung im Nassscheuerprüfgerät eingespannten Faser. Das Vorspanngewicht beträgt bei einem Titer zwischen 1,2 bis 1,8 dtex 70 mg. Die Drehzahl der Scheuerwelle betrug 400 U/min, der Umschlingungswinkel 45°. Die Scheuerwelle ist mit einem Gewebeschlauch versehen.

Das erfindungsgemäße Verfahren und die Vorrichtung sieht vor, dass für das Spinnverfahren mindestens 2 Spinngasbehandlungsströme dem Fadenbildungsprozess zugeführt werden wobei der Behandlungsstrom 1 einen Volumenstrom in Liter pro Stunde und mm Spinndüsenlänge darstellt und wie in Beispiel 4 (erfindungsgemäßes Beispiel eine erhöhte Temperatur, in Grad Celsius gemessen einnimmt.

Der erfindungsgemäße Spinngas-Behandlungsstrom 2, welche ebenfalls in Liter pro Stunde und mm Spinndüsenlänge ausgedrückt wird, wird dem erfindungsgemäßen Verfahren, bzw. der Vorrichtung mit einer Temperatur, gemessen in °Celsius mit einer Temperatur unterhalb der Temperatur von Behandlungsstrom 1 zugeführt.

Für beide Spinngas- Formkörperbehandlungsströme wird ebenfalls eine absolute Feuchte in g/kg trockener Luft angegeben.

Die durch den Behandlungsraum durchtretenden Spinngas-Behandlungsströme bilden das so genannte Spinngas-Abgas, deren Temperatur in Grad Celsius gemessen wird.

Anzumerken ist, dass die Vergleichsbeispiele 1, 2 und 3 vergleichsweise ohne der Zuführung eines Spinngas-Behandlungsstromes 2 durchgeführt wurden.

Die in der Spinnlösung tritt eine Entspannungsverdampfung dadurch auf, dass die vorgeheizte Spinnmasse in eine Umgebung geringeren Druckes eintritt, wobei die freiwerdende Lösungsmittel (Gemisch) Menge implizit einerseits zur Kühlung des aus der Düsenentspannungs-vorrichtung austretenden Polymerstromes fungiert. D.h. die Druckabsenkung des Polymerstromes (Celluloselösung) von z.B. 25 - 50 bar auf Umgebungsdruck führt zu einer Überhitzung der Polymerlösung, der neue sich einstellende Druck in der geformten Polymerlösung verbreitet sich mit hoher Geschwindigkeit über die sich ausdehnende Polymermasse in die Luftspaltumgebung. Gelichzeitig kommt es mit der Druckentlastung zu einer Änderung des spezifischen Volumens in cm3/g.

Die Temperaturänderung wird durch Stoffübergänge wie z.B. Wärmeübergänge an der Phasengrenze verlangsamt, sodass davon auszugehen ist, dass ein thermodynamisches Gleichgewicht der Polymerlösung bzw. Spinnlösung im gesponnenen Faden nicht mehr vorliegt. Die durch Druckentlastung stattfindende Überhitzung der Spinnlösung wird durch die Energieübertragung an Siedekeimen und Dampfblasen des System NMMO/NMM/M/Wasser abgebaut.

Der Energieeintrag in die Siedekeime der Lösung führt konsequenterweise zu einem "Mikroblasenwachstum" und Austreten der "Mikroblasen" (Mikroblasenzusammensetzung NMMO/NMM/M und Wasser) aus dem viskosen Polymerfaden welcher noch gleichzeitig verstreckt wird.

Das Ausspeichern von Mikroblasen = Masse aus dem Polymerlösungssystem in Form von NMMO/NMM/M - H2O Dampf (sichtbar als Sublimationsprodukt - Zerstäubung mittels einer Spinndüse in eine Umgebung geringer Dichte) entzieht dem Polymerlösungssystem (=Faden) die Temperatur die in der Polymerlösung gelösten Anteile von NMM/M Wasser gasen aus.

Beim erfindungsgemäßen verfahren und Vorrichtung konnte in den Beispielen nachgewiesen werden, das sich während des Spinnprozesses eine Aerosol aus kristallisiertem NMMO abscheidet, das heißt es wird angenommen, das sich aufgrund der Druckentlastung über den Düsenkanal das Lösungsmittel NMMO mit gebundenem Hydratwasser, sowie evtl. auftretenden NMMO - Zersetzungsprodukten, wie NMM und M aus dem Extrudat austritt und abgeschieden wird. Bei den Vergleichsbeispielen wurde das Aerosol direkt an der Düsenabstromseite gemessen, wobei die Partikelgröße bei einem Partikelmaximum in µm angegeben ist.

Die dargestellte Partikelanzahl bezieht sich auf das Partikelmaximum.

In den Vergleichsbeispielen wurde das Spinngas - Abgas 200mm nach der Düsenabstromseite einer Aerosol Messung zum Nachweis von kristallisiertem NMMO unterzogen, wobei die Partikelgröße bei einem Partikelmaximum in µm angegeben ist und die Partikelanzahl sich auf das Partikelmaximum bezieht.

Aus den Vergleichsbeispielen ist ersichtlich, dass das erfindungsgemäße Verfahren / Vorrichtung bedingt durch den warmen Spinngasbehandlungsstrom 1 und den kühler gesetzten Spinngas Behandlungsstrom 2 sich eine Abgastemperatur von 60 bis 80 °C einstellt. Das erfindungsgemäße verfahren zeichnet sich gerade dadurch aus, dass bedingt durch die beiden Gasteilströme - geschichtet die Anzahl der auskristallisierten NMMO Partikel direkt an der Düsenabstromseite bedingt durch die erhöhte Temperatur einen relativ gering ist.

Mit Zunahme der Distanz von der Düsenabstromseite nimmt zwar die Partikelanzahl auch beim erfindungsgemäßen Verfahren zu, jedoch gegenüber dem Stand der Technik nicht in dem Maße, was offensichtlich für ein reduziertes Ausdampfen / Resublimieren von NMMO aus dem Extrudat spricht. Die Vergleichsbeispiele 1 bis 3 zeigen allesamt, dass es, bedingt durch die kühle Fahrweise des Spinngas - Behandlungsstromes, sowie in Kombination mit einer relativ großen Druckentspannung über die Spinndüse (Druckverlust im Kapillar) es zu einer vermehrten Aerosolbildung (Kristallisiertes NMMO) direkt an der Düsenabstromseite aber auch in einer Entfernung von 200 mm von der Düsenabstromseite kommt.

Überraschender Weise wurde gefunden, dass über das erfindungsgemäße Verfahren, dargestellt in Beispiel 4 sich verbesserte textile Fasereigenschaften einstellen lassen (Nassscheuerzahl) sowie sich ein stabileres Spinnverhalten einstellt.

## Patentansprüche

1. Verfahren zur Herstellung von festen Materialfilamenten oder -folien aus einem Fluid des Materials durch Extrudieren des Fluids durch eine oder mehrere Extrusionsöffnungen und Verfestigen des Materials in einem Auffangbad, wobei das geformte Material zwischen den Extrusionsöffnungen und dem Auffangbad durch einen seitlichen Gasstrom geführt wird, **dadurch gekennzeichnet, dass** der Gasstrom in einen Heizteilstrom und einen Kühlteilstrom unterteilt ist, wobei das Material zuerst mit dem Heizteilstrom und anschließend den Kühlteilstrom in Kontakt gebracht wird, bevor es in das Auffangbad eingebracht wird.

2. Verfahren nach Anspruch 1, **dadurch gekennzeichnet, dass** der Bereich zwischen den Extrusionsöffnungen und dem Auffangbad im Wesentlichen vollständig durch den seitlichen Gasstrom gespült wird.

3. Verfahren nach Anspruch 1 oder 2 **dadurch gekennzeichnet, dass** der seitliche Gasstrom laminar ist, sodass es zu keiner wesentlichen Durchmischung der Teilströme kommt.

4. Verfahren nach einem der Ansprüche 1 bis 3, **dadurch gekennzeichnet, dass** der beheizte Teilstrom durch eine Extrusionsplatte mit den Extrusionsöffnungen und/oder durch ein Heizelement in einem Gebläse beheizt wird.

5. Verfahren nach einem der Ansprüche 1 bis 4, **dadurch gekennzeichnet, dass** das Material eine thermoplastische Masse ist.

6. Verfahren nach einem der Ansprüche 1 bis 5, **dadurch gekennzeichnet, dass** das Material eine Zellulose-Lösung ist.

7. Verfahren nach einem der Ansprüche 1 bis 6, **dadurch gekennzeichnet, dass** die Temperatur des Materials an den Extrusionsöffnungen zwischen 70 und 130°C liegt.

8. Extrusionsvorrichtung zur Herstellung von festen Materialfilamenten oder -folien nach einem Verfahren gemäß einem der Ansprüche 1 bis 6, mit ein oder mehreren Extrusionsöffnungen, mit einem Gasgebläse, welches über eine Vielzahl an Austrittsöffnungen zum seitlichen Beblasen eines durch die Extrussionsöffnungen gepressten Materials mit einem Gasstrom verfügt, wobei ein Teil des Gasstroms als Heizteilstrom und ein weiterer Teil als Kühlteilstrom geführt ist, und mit mindestens einem Heizelement zur Beheizung des Gasstroms im Heizteilstrom.

9. Vorrichtung nach Anspruch 8, **dadurch gekennzeichnet, dass** die Extrusionsöffnungen in einer Extrusionsplatte aufgenommen sind, welche vorzugsweise über ein Heizelement verfügt.

10. Vorrichtung nach Anspruch 9, **dadurch gekennzeichnet, dass** der Wärmeleitkoeffizient der Extrusionsplatte 5 bis 100 W/mK, vorzugsweise 10 bis 60 W/mK beträgt.

11. Vorrichtung nach einem der Ansprüche 8 bis 10, **dadurch gekennzeichnet, dass** in Richtung des seitlichen Gasstroms mehrere Extrusionsöffnungen vorgesehen sind.

12. Vorrichtung nach Anspruch 11, **dadurch gekennzeichnet, dass** die Extrusionsöffnungen auf einer bombierten Extrusionsplatte vorgesehen sind, wobei vorzugsweise der Wölbungswinkel a am Rand der Extrusionsplatte zur Extrudierrichtung ein spitzer Winkel ist.

13. Vorrichtung nach einem der Ansprüche 8 bis 12, mit einem Führungselement zur laminaren Ableitung des Gasstroms entlang der Extrusionsvorrichtung, insbesondere entlang des bombierten Bereichs der Extrusionsplatte.

14. Vorrichtung nach einem der Ansprüche 8 bis 13, **dadurch gekennzeichnet, dass** das Gebläse zur Extrudierrichtung in einem spitzen Winkel angeordnet ist.

15. Verwendung einer Vorrichtung nach einem der Ansprüche 8 bis 14 zur Durchführung eines Verfahrens nach einem der Ansprüche 1 bis 7.

## Claims

1. Method for producing solid material filaments or sheets from a fluid of the material by extruding the fluid through one or more extrusion openings and solidifying the material in a collection bath, the shaped material being guided between the extrusion openings and the collection bath by means of a lateral gas flow, **characterised in that** the gas flow is divided into a hot partial flow and a cold partial flow, the material being brought into contact first with the hot partial flow and then with the cold partial flow, before being introduced into the collection bath.

2. Method according to claim 1, **characterised in that** the region between the extrusion openings and the collection bath is substantially completely rinsed by the lateral gas flow.

3. Method according to either claim 1 or claim 2, **characterised in that** the lateral gas flow is laminar, and therefore there is substantially no intermixing of the partial flows.

4. Method according to any of claims 1 to 3, **characterised in that** the heated partial flow is heated by means of an extrusion plate comprising the extrusion openings and/or by means of a heating element in a blower.

5. Method according to any of claims 1 to 4, **characterised in that** the material is a thermoplastic compound.

6. Method according to any of claims 1 to 5, **characterised in that** the material is a cellulose solution.

7. Method according to any of claims 1 to 6, **characterised in that** the temperature of the material at the extrusion openings is between 70 and 130°C.

8. Extrusion device for producing solid material filaments or sheets in accordance with a method according to any of claims 1 to 6, comprising one or more extrusion openings, comprising a gas blower, which has a plurality of outlet openings for laterally blowing a material pressed through the extrusion openings by means of a gas flow, wherein part of the gas flow is guided as a hot partial flow and another part is guided as a cold partial flow, and comprising at least one heating element for heating the gas flow in the hot partial flow.

9. Device according to claim 8, **characterised in that** the extrusion openings are made in an extrusion plate, which preferably has a heating element.

10. Device according to claim 9, **characterised in that** the coefficient of thermal conduction of the extrusion plate is from 5 to 100 W/mK, preferably 10 to 60 W/mK.

11. Device according to any of claims 8 to 10, **characterised in that** a plurality of extrusion openings are provided in the direction of the lateral gas flow.

12. Device according to claim 11, **characterised in that** the extrusion openings are provided on a cambered extrusion plate, the angle of curvature a relative to the extrusion direction at the edge of the extrusion plate preferably being an acute angle.

13. Device according to any of claims 8 to 12, comprising a guide element for laminarly diverting the gas flow along the extrusion device, in particular along the cambered region of the extrusion plate.

14. Device according to any of claims 8 to 13, **characterised in that** the blower is arranged at an acute angle to the extrusion direction.

15. Use of a device according to any of claims 8 to 14 for carrying out a method according to any of claims 1 to 7.

## Revendications

1. Procédé de fabrication de filaments ou de films de matériaux solides à partir d'un fluide du matériau par extrusion du fluide à travers une ou plusieurs ouvertures d'extrusion et solidification du matériau dans un bain de collecte, le matériau formé étant guidé entre les ouvertures d'extrusion et le bain de collecte par un flux de gaz latéral, **caractérisé en ce que** le flux de gaz est divisé en un flux partiel de chauffage et un flux partiel de refroidissement, le matériau étant d'abord mis en contact avec le flux partiel de chauffage puis avec le flux partiel de refroidissement, avant d'être introduit dans le bain de collecte.

2. Procédé selon la revendication 1, **caractérisé en ce que** la zone entre les ouvertures d'extrusion et le bain de collecte est globalement entièrement rincée par le flux de gaz latéral.

3. Procédé selon la revendication 1 ou 2, **caractérisé en ce que** le flux de gaz latéral est laminaire de façon à ce que, globalement, les flux partiels ne se mélangent pas.

4. Procédé selon l'une des revendications 1 à 3, **caractérisé en ce que** le flux partiel chauffé est chauffé par une plaque d'extrusion avec les ouvertures d'extrusion et/ou par un élément chauffant dans un ventilateur.

5. Procédé selon l'une des revendications 1 à 4, **caractérisé en ce que** le matériau est une masse thermoplastique.

6. Procédé selon l'une des revendications 1 à 5, **caractérisé en ce que** le matériau est une solution de cellulose.

7. Procédé selon l'une des revendications 1 à 6, **caractérisé en ce que** la température du matériau au niveau des ouvertures d'extrusion est entre 70 et 130°C.

8. Dispositif d'extrusion pour la fabrication de filaments ou de films de matériaux solides selon un procédé selon l'une des revendications 1 à 6, avec une ou plusieurs ouvertures d'extrusion, avec un ventilateur de gaz, qui dispose d'une pluralité d'ouvertures de sortie pour le soufflage latéral d'un matériau pressé à travers les ouvertures d'extrusion avec un flux de gaz, une partie du flux de gaz étant guidée sous la forme d'un flux partiel de chauffage et une autre partie étant guidée sous la forme d'un flux partiel de refroidissement, et avec au moins un élément chauffant pour le chauffage du flux de gaz dans le flux partiel de chauffage.

9. Dispositif selon la revendication 8, **caractérisé en ce que** les ouvertures d'extrusion sont logées dans une plaque d'extrusion qui dispose de préférence d'un élément chauffant.

10. Dispositif selon la revendication 9, **caractérisé en ce que** le coefficient de conduction thermique de la plaque d'extrusion est de 5 à 100 W/mK, de préférence de 10 à 60 W/mK.

11. Dispositif selon l'une des revendications 8 à 10, **caractérisé en ce que**, en direction du flux de gaz latéral, sont prévues plusieurs ouvertures d'extrusion.

12. Dispositif selon la revendication 11, **caractérisé en ce que** les ouvertures d'extrusion sont prévues sur une plaque d'extrusion bombée, de préférence l'angle de bombement au bord de la plaque d'extrusion par rapport à la direction d'extrusion étant un angle aigu.

13. Dispositif selon l'une des revendications 8 à 12, avec un élément de guidage pour la déviation laminaire du flux de gaz le long du dispositif d'extrusion, plus particulièrement le long de la zone bombée de la plaque d'extrusion.

14. Dispositif selon l'une des revendications 8 à 13, **caractérisé en ce que** le ventilateur est disposé à un angle aigu par rapport à la direction d'extrusion.

15. Utilisation d'un dispositif selon l'une des revendications 8 à 14 pour l'exécution d'un procédé selon l'une des revendications 1 à 7.
